# EUROPEAN PATENT SPECIFICATION

(11) **EP 3 651 898 B1**
(45) Date of publication and mention of the grant of the patent: **07.06.2023**
(21) Application number: 18740908.1
(22) Date of filing: 21.06.2018
(51) Int. Cl.: B01J 23/63, B01J 23/00, B01J 23/89, B01J 35/00, B01J 35/10, B01J 13/04, B01J 37/08, B01D 53/86, B01J 37/00

(54) **CATALYSTS BASED ON PD/CEO2 AND PREPARATION METHOD THEREOF**
KATALYSATOREN AUF BASIS VON PD/CEO2 UND HERSTELLUNGSVERFAHREN DAFÜR
CATALYSEURS À BASE DE PD/CEO2 ET LEUR PROCÉDÉ DE PRÉPARATION

(30) Priority: 23.06.2017 IT 201700070360
(43) Date of publication of application: 20.05.2020
(73) Proprietor: Universita' Degli Studi di Udine, 33100 Udine (IT)
(72) Inventor: TROVARELLI, Alessandro, 33100 Pagnacco (Udine) (IT); COLUSSI, Sara, 33034 Fagagna (Udine) (IT); DANIELIS, Maila, 33100 Udine (IT); TOSO, Alessandra, 33033 Codroipo (Udine) (IT); LLORCA, Jordi, 08022 Barcelona, Barcelona (ES)
(74) Representative: Biggi, Cristina
(86) International application number: PCT/IB2018/054583
(87) International publication number: WO 2018/235032

(56) References cited:
- WO-A1-2016/127430
- WO-A2-03/101612
- JIN JIANHUI ET AL: "Solid-State Method Toward PdO-CeO2Coated Monolith Catalysts for Oxygen Elimination Under Excess Methane", CATALYSIS LETTERS, SPRINGER NEW YORK LLC, UNITED STATES, vol. 144, no. 12, 14 September 2014 (2014-09-14), pages 2052-2064, XP035903449, ISSN: 1011-372X, DOI: 10.1007/S10562-014-1366-6 [retrieved on 2014-09-14]
- DONG QIANG ET AL: "Aluminium doped ceria-zirconia supported palladium-alumina catalyst with high oxygen storage capacity and CO oxidation activity", MATERIALS RESEARCH BULLETIN, vol. 48, no. 12, 21 May 2013 (2013-05-21), pages 4989-4992, XP028736934, ISSN: 0025-5408, DOI: 10.1016/J.MATERRESBULL.2013.05.054
- MAJD AL-NAJI ET AL: "Mechanochemical preparation of advanced catalytically active bifunctional Pd-containing nanomaterials for aqueous phase hydrogenation", CATALYSIS SCIENCE & TECHNOLOGY, vol. 5, no. 4, 1 January 2015 (2015-01-01) , pages 2085-2091, XP055511546, United Kingdom ISSN: 2044-4753, DOI: 10.1039/C4CY01174K

## Description

The invention provides a Pd-ceria catalyst for the oxidation of methane and/or VOC and a method for its preparation.

### BACKGROUND

The recent concerns over the abundant emission of greenhouse gases from motor vehicles have pushed towards the development of more efficient catalyst systems.

In particular, for natural gas fueled vehicles there is the need for the design of catalytic systems with higher activity at low temperature and more resistant to deactivation in operating conditions. These issues are becoming more and more important due to the exponential growth of the market of such vehicles. Catalysts used for the after-treatment of methane from exhaust gases or for methane conversion in general are usually comprised by a support oxide and a noble metal, which acts as the active phase.

In the literature, the palladium-ceria system is indicated as one of the most active for the catalytic combustion of methane (EP830199 and FR2546770) and its application is widely spread, alone or in combination with other metals or supports. In these systems, the noble metal is usually deposited onto the support oxide surface starting from a Pd-containing solution, whether it is by the co-precipitation method, wet deposition or incipient wetness impregnation (IWI). The IWI method is the current state-of-the-art procedure, as it leads to a catalyst with a nice and uniform dispersion of palladium oxide in small clusters onto the ceria surface after calcination. The disadvantages of these syntheses are connected to the use of solvents or acid solutions, used to promote the uniform distribution of noble metal onto the support, which have to be stocked, disposed of and after-treated when in the vapor form.

However, it would be highly desirable to reduce the environmental impact of catalysts manufacturing processes, e.g. by cutting off the use of solvents and/or by limiting the number of synthesis steps.

The mechanochemical approach is regarded as a very promising methodology to cope with these requests, even if the high number of controlling parameters hinders its widespread use in the catalyst industry. Despite there being some applications, this technology is far from being largely implemented at industrial level because disadvantages still exist. For instance, some materials obtained by the mechanochemical approach do not show better catalytic performances compared to their impregnated counterparts (Ismagilov Z.R. et al., Catal Today, 2010, 157, 217-222), while in other publications the catalysts are highly active but require longer milling times and higher energies (Borchers C. et al., J Nanopart Res, 2016, 18, 344, Kamolphop U. et al., ACS Catal, 2011, 1, 1257-1262 and EP2040835), for example with the use of planetary mills, high ball-to-powder weight ratios and milling times of the order of few hours.

In other methods, there is the need for additives and subsequent thermal treatments, sometimes in combination with high energies.

WO2016127430 A1 (and EP3257815 A1) discloses cerium oxide particles having multi-cores single-shell structure comprising a cerium oxide shell, the shell being composed of crystalline and/or amorphous nano-scale cerium oxide particles, and a plurality of nano-scale cerium oxide cores aggregates located at the interior of the shell. The shell thickness ranges from 10 to 200 nm. The cerium oxide is prepared by precipitation followed by spray-drying and calcination. A catalyst containing 2 wt% Pd supported on said cerium oxide is tested in oxidative reactions.

In view of the considerations reported above, it is still strongly felt the need of developing a process for the preparation of a Pd-ceria catalyst system suitable for the catalytic oxidation of methane and/or VOC, said process having low environmental impact, thereby not involving the use of solvents, and being of simple industrial implementation.

Moreover, the catalytic activity of the catalyst system obtained/obtainable by the process should preferably be at least comparable to the catalytic activity of Pd-ceria catalysts obtained with IWI method.

The present invention solves the needs above reported by providing a mechanochemical process to produce a core-shell Pd-ceria catalyst system comprising dry grinding at least one selected among palladium metal, a solid organic salt of palladium and mixtures thereof, with at least one Ce-based compound selected among ceria, ceria-based mixed oxides and mixtures thereof, under mild grinding conditions (fast and low energy milling, at ambient temperature).

The Applicant has surprisingly found that the Pd-ceria catalyst system obtained/obtainable by the process of the invention, wherein only solid starting materials are used, is characterized by the claimed peculiar morphological core-shell structure.

Remarkably, said catalyst system was found to be highly active for catalytic abatement of gaseous hydrocarbon, particularly methane, VOC, NOx and/or soot. In particular, the catalyst system is more active than Pd-ceria catalysts obtained by conventional incipient wetness impregnation of comparable Pd loading.

### SUMMARY OF THE INVENTION

In a first aspect the present invention refers to a core-shell catalyst system, characterized in that
- the core comprises at least one oxide selected among ceria, a ceria-based mixed oxide and mixtures thereof, preferably ceria, said core comprising at least one particle having size of about 2-100 nm; and
- the shell comprises an amorphous phase comprising Pd and an oxide selected among ceria, a ceria-based mixed oxide and mixtures thereof, the shell having thickness of ≤ about 5 nm.

In a further aspect, the present invention refers to a method for the preparation of the core-shell catalyst system described above comprising a step (i) of dry grinding a mixture comprising at least one selected among metallic Pd, a solid organic salt of palladium and mixtures thereof, and at least one oxide selected among ceria, a ceria-based mixed oxide and mixtures thereof.

In a still further aspect, the present invention refers to the use of the core-shell catalyst system of the instant disclosure for the catalytic abatement of at least one selected among a gaseous hydrocarbon, preferably methane, a VOC, NOx, soot and mixtures thereof.

### DESCRIPTION OF THE FIGURES

The present invention is described in detail even with the help of the following figures, in which:
Figure 1 reports the light-off curves for PdCe DS and PdCe IW;
Figure 2 reports the light-off curves for PdAcCe DS 10, PdAcCe DS 15 and PdCe IW;
Figure 3 reports the light-off curves for PdCZ75 DS and PdCZ75 IW;
Figure 4 reports the light-off curves for PdPtCe DS and PdPtCe IW; and
Figure 5 reports the light-off curves for CuPdCe DS and CuPdCe IW.

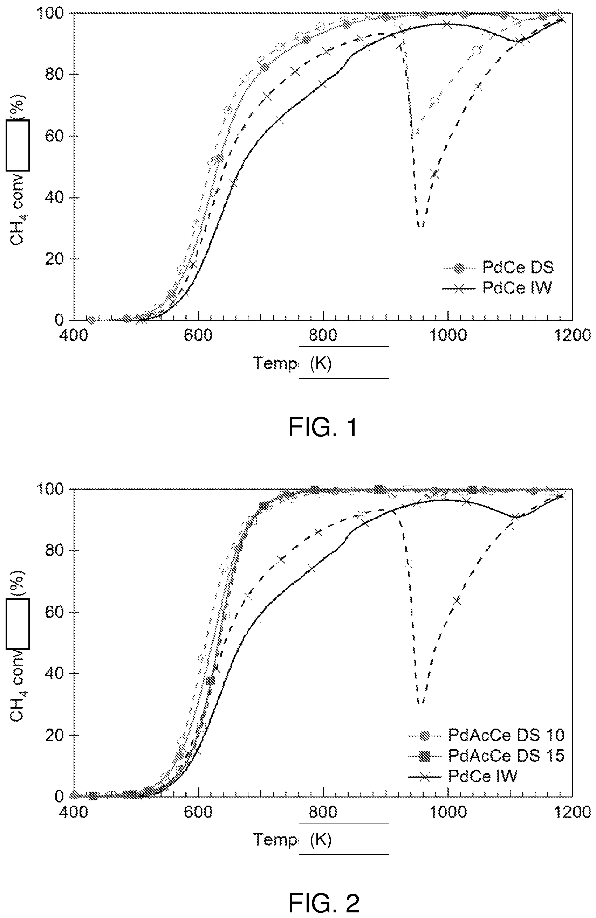

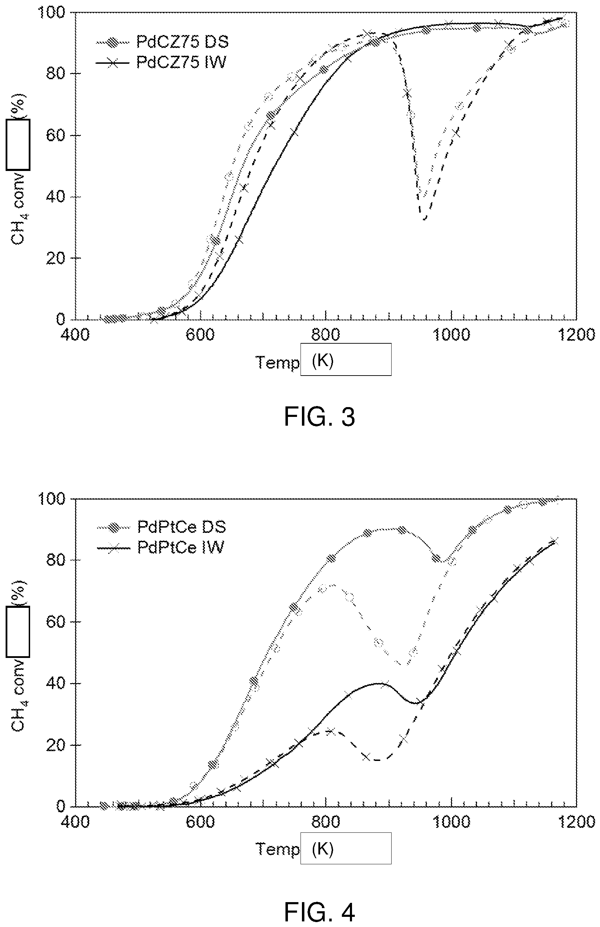

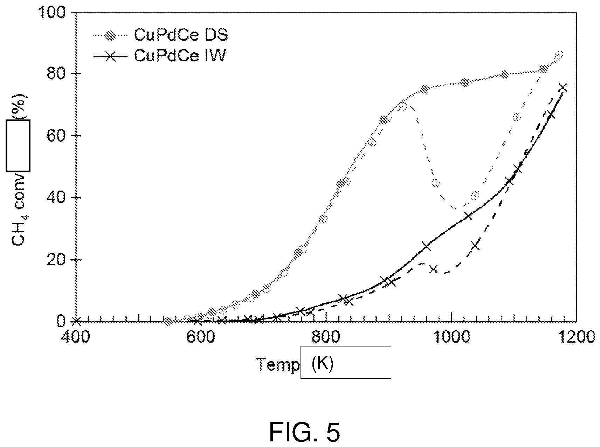

In Figures 1-5 the solid lines, closed symbols represent heating; dotted lines, open symbols represent cooling.

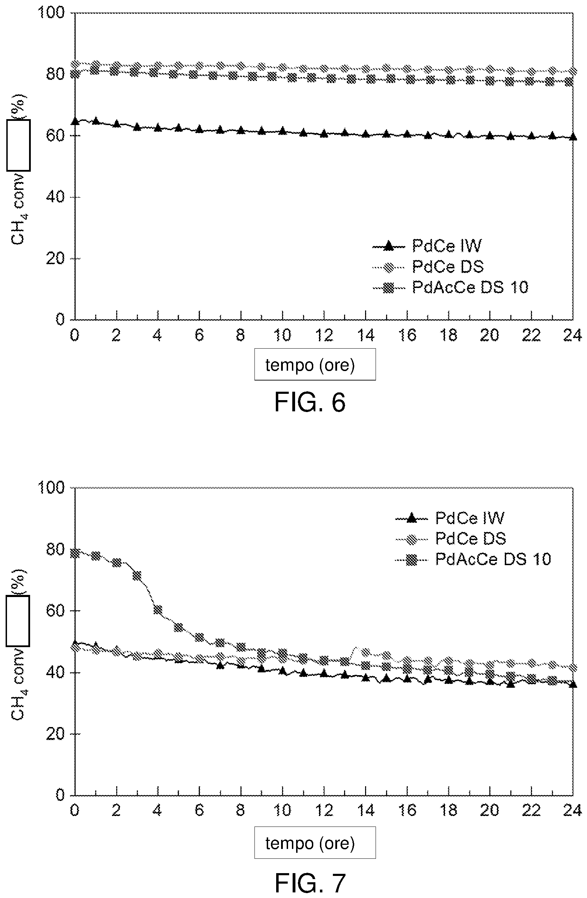

Figure 6 reports the time-on-stream behavior of PdCe DS, PdAcCe DS 10 and PdCe IW in dry atmosphere.
Figure 7 reports the time-on-stream behavior of PdCe DS, PdAcCe DS 10 and PdCe IW in wet atmosphere.

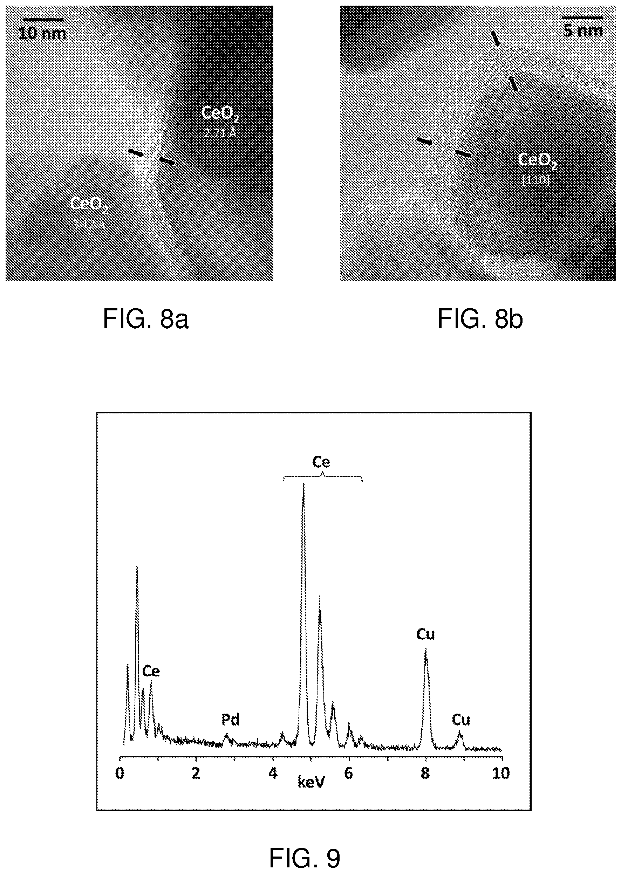

Figure 8a and 8b report HRTEM images of different portions of PdCe DS.
Figure 9 reports the EDX analysis of PdCe DS.

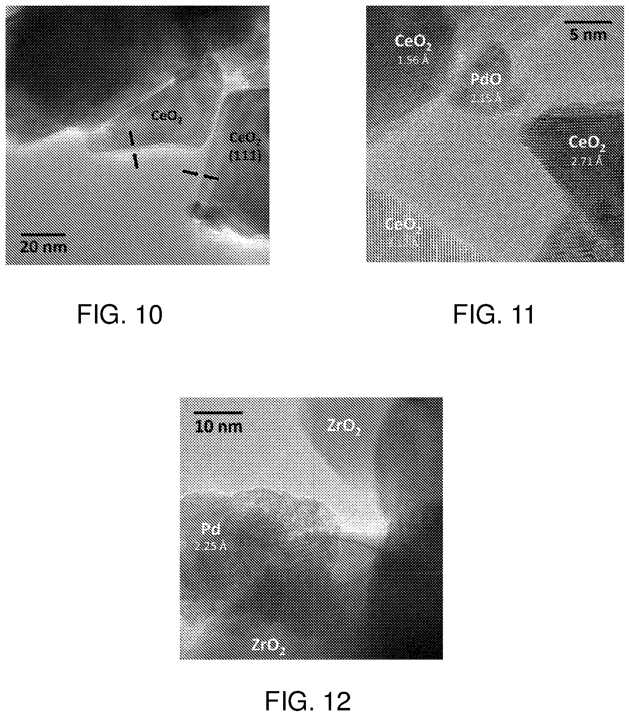

Figure 10 reports the HRTEM image of PdCeAc DS10.
Figure 11 reports the HRTEM image of PdOCe DS.
Figure 12 reports the HRTEM image of PdZr DS.

### DETAILED DESCRIPTION

In the present description and in appended claims, the term "ceria" refers to cerium(IV) oxide of formula CeO₂ as well as to any non-stoichiometric, anion deficient form of ceria having formula CeO_{(2-X)}.

In the present description and in the appended claims, the term "ceria-based mixed oxide" refers to a cerium(IV) oxide or to a mixture of Ce(IV)/Ce(III) oxide comprising at least one cation of a chemical element different from cerium.

In the context of the present invention, the term "solid" refers to chemicals which are solid at 25°C and 101,3 kPa.

In the context of the present invention, the term "dry grinding" refers to a crushing operation carried out in the absence of a solvent, i.e. wherein only solid materials, preferably in powder form, are fed to the grinding apparatus.

In the context of the present invention, the amount of a metal in the catalyst system is expressed as wt.% of elemental metal with respect to the total weight of the catalyst system. It corresponds to the nominal load of the metal onto the catalyst system, the nominal load of a metal being the amount of metal added to (loaded onto) the catalyst system.

In the present description and appended claims the term "Volatile Organic Compound (VOC)" refers to any organic chemical compound whose composition makes it possible for it to evaporate at 25°C and 101.3 kPa.

In the context of the present invention, the term "gaseous hydrocarbons" refers to hydrocarbons which are in the gaseous state at 25°C and 101.3 kPa.

In a first aspect the present invention refers to a core-shell catalyst system, characterized in that
- the core comprises at least one oxide selected among ceria, a ceria-based mixed oxide and mixtures thereof, said core comprising at least one particle having size of about 2-100 nm, preferably of about 5-100 nm, more preferably of about 20-80 nm; and
- the shell comprises an amorphous phase comprising Pd and an oxide selected among ceria, a ceria-based mixed oxide and mixtures thereof, the shell having thickness of ≤ about 5 nm, preferably of about 0,5 - 5 nm. In one embodiment, the core may comprise ceria.

In one embodiment, the core may consist of at least one oxide selected among ceria, a ceria-based mixed oxide and mixtures thereof, preferably the core may consist of ceria.

In one embodiment, the ceria-based mixed oxide may comprise (be doped with) ≤ about 40 mol.%, preferably about 1-40 mol.%, more preferably about 10-30 mol.%, of at least one element selected among Zr, In, Sn, La, Pr, Nd, Pm, Sm, Eu, Gd, Tb, Dy, Ho, Er, Tm, Yb, Lu, Sc, Y and mixtures thereof, preferably Zr.

The oxide comprised in the core of the catalyst system may have low or high surface area, preferably comprised in the range ≤ about 50 m²/g, more preferably about 0,5-50 m²/g, still more preferably about 2,0 - 30,0 m2/g.

The surface area of the oxide comprised in the core is measured using the BET method as described below, on the oxide (cerium oxide, cerium-based mixed oxide) in its powder form, after calcination, if any, and before milling with the noble metal.

In the core-shell catalyst system of the invention, the shell preferably comprises the same oxide or oxides comprised in the core of the catalyst system.

In one embodiment, the size of the core may be equal to or greater than the thickness of the shell, preferably the size of the core may be greater than the thickness of the shell.

In one embodiment, the shell may comprise ≤ about 5,0 wt.% of Pd, preferably ≤ about 2,0, more preferably ≤ about 1,5 wt.%, still more preferably about 0,1 - 1,0 wt.%, wherein the amount of Pd corresponds to the nominal load of Pd.

In a further embodiment, the shell may comprise at least one further metal M selected among Cu, Ru, Rh, Ag, Os, Ir, Pt, Au and mixture thereof, preferably among Cu, Pt and mixtures thereof, more preferably it is Pt.

In one embodiment, the total metal loading of the catalyst system may be ≤ about 5,0 wt.%, preferably ≤ about 2,0 wt.%, more preferably ≤ about 1,5 wt.%, still more preferably about 0,1 - 1,0 wt.%, wherein the total metal loading is the sum of the weights of the metals loaded onto the catalyst system, including Pd, expressed as wt.% with respect to the weight of the catalyst system.

TEM analysis performed on a series of samples showed that no metal is present inside the oxide core of the catalyst system, suggesting that all loaded noble metal is found on the particles surface (i.e. in the shell).

Thus, the metal content of the shell corresponds to the nominal metal loading.

In one embodiment, the weight ratio Pd:M (metal(s)) may range from about 90:10 to about 10:90, preferably from about 70:30 to about 30:70, more preferably the weight ratio Pd:M may be about 50:50.

The weight ratio refers to the ratio between the nominal loading of Pd and the nominal loading of the second metal M.

In one embodiment, the shell may consist of an amorphous phase comprising Pd and an oxide as described above.

In one embodiment, the shell may consist of an amorphous phase consisting of Pd and an oxide as described above.

In one embodiment, the Pd comprised in the shell may be selected among metallic Pd, an organic salt of Pd and mixtures thereof, more preferably may be selected among metallic Pd, Pd(CH₃COO)₂ and mixtures thereof, more preferably may be metallic Pd.

When present, the further metal M comprised in the shell may be selected among metallic M, a solid compound of metal M and mixtures thereof, preferably may be metallic M.

According to a preferred embodiment, the shell of the catalyst system of the invention may comprise metallic Pd and metallic Pt.

In a further aspect, the present invention refers to a method for the preparation of the core-shell catalyst system described above comprising a step (i) of dry grinding a mixture comprising at least one selected among metallic Pd, a solid organic salt of palladium and mixtures thereof and at least one oxide selected among ceria, a ceria-based mixed oxide and mixtures thereof.

According to one embodiment, for the preparation of the core-shell catalyst system of the invention wherein the shell comprises a further metal M, the method may comprise a further step (ii) of dry grinding the core-shell catalyst system obtained from step (i) with at least one selected among metallic M, a solid compound of metal M and mixtures thereof, preferably metallic M.

In one embodiment, for the preparation of the core-shell catalyst system wherein the shell comprises a further metal M, the mixture of step (i) may comprise at least one selected among metallic M, a solid compound of metal M and mixtures thereof, preferably metallic M.

In one embodiment, the mixture of step (i) may comprise at least one selected among metallic M, a solid compound of metal M and mixtures thereof, preferably metallic M, and the method may comprise a further step (ii) as described above.

In one embodiment, said at least one further metal M may be selected among Cu, Ru, Rh, Ag, Os, Ir, Pt, Au and mixture thereof, preferably among Cu, Pt and mixtures thereof, more preferably Pt.

In one embodiment, the total metal loading of the catalyst system may be ≤ about 5,0 wt.%, preferably ≤ about 2,0 wt.%, more preferably ≤ about 1,5 wt.%, still more preferably about 0,1 - 1,0 wt.%, wherein the metal loading is the sum of the weights of the metals, including Pd, loaded onto the catalyst system in step (i) and in step (ii), if present, expressed as wt.% with respect to the weight of the catalyst system.

In one embodiment, the weight ratio Pd:M (metal(s)) may range from about 90:10 to about 10:90, preferably from about 70:30 to about 30:70, more preferably the weight ratio Pd:M may be about 50:50.

The weight ratio refers to the ratio between the nominal loading of Pd and the nominal loading of the second metal M.

In one embodiment, the amount of Pd in the mixture of the dry grinding step (i) may be ≤ about 5,0 wt.%, preferably ≤ about 2,0 wt.%, more preferably ≤ about 1,5 wt.%, still more preferably about 0,1 - 1,0 wt.% (palladium nominal loading).

The Pd compound of step (i) may be selected among metallic Pd, Pd(CH₃COO)₂ and mixtures thereof, preferably may be metallic Pd. When present, the solid compound of the further metal M may be selected among an organic compound of M, an inorganic compound of M and mixtures thereof.

In a preferred embodiment, the dry-grinding step (i) and/or (ii) may be carried out at temperature of about 20-35°C and pressure of about 101,3 kPa.

In one embodiment, the dry grinding step (i) and the dry grinding step (ii), if present, may be carried out by ball-milling.

In one embodiment, the dry grinding step (i) and the dry grinding step (ii), if present, may be carried out using only one grinding ball.

In one embodiment, the weight ratio of grinding media to powders may be comprised in the range of about 5-20, preferably may be about 10. A higher ball-to-powder weight ratio induces a noticeable worsening of the catalytic activity.

In one embodiment, the dry grinding step (i) and the dry grinding step (ii), if present, may be carried out for a time comprised of about 5-20 minutes. The Applicant has surprisingly found that milling times lower than 5 minutes gave unsatisfactory results as the contact between metal and support was insufficient to obtain an optimized shell layer, whereas longer milling time induces a noticeable worsening of the catalytic activity. According to a preferred embodiment, the method for the preparation of the core-shell catalyst system may comprise a step (a) of calcining the at least one oxide selected among ceria, a ceria-based mixed oxide and mixtures thereof, wherein step (a) is carried out before the dry grinding step (i). The calcining step (a) may be carried out in presence of oxygen, more preferably of air. In a further preferred embodiment, the calcining step (a) may be carried out at temperature ≥ about 850°C, preferably of about 850° - 1200°C, more preferably of about 850°-1000°C, still more preferably of about 900°C, for a time ≥ about 2 hours, preferably of about 2 - 4 hours, more preferably of about 3 hours.

In one embodiment, the at least one ceria-based mixed oxide used in the dry grinding step (i) may comprise (be doped with) ≤ about 40 mol.%, preferably about 1-40 mol.%, more preferably about 10 - 30 mol.%, of at least one element selected among Zr, In, Sn, La, Pr, Nd, Pm, Sm, Eu, Gd, Tb, Dy, Ho, Er, Tm, Yb, Lu, Sc, Y and mixtures thereof, preferably Zr.

In one embodiment, the oxide of the dry grinding step (i) may have low or high surface area, preferably comprised in the range ≤ about 50 m²/g, more preferably about 0,5-50 m²/g, still more preferably about 2,0 - 30,0 m²/g. The surface area of the oxide of the dry grinding step (i) is measured using the BET method as described below, on the oxide (cerium oxide, cerium-based mixed oxide) in its powder form, after calcination, if any, and before milling with the noble metal.

In one embodiment, the dry grinding step (i) and the dry grinding step (ii), if present, may be carried out under low energy milling. According to a preferred embodiment, the dry grinding steps (i) and (ii), if present, may be carried out in a ball-mill oscillating at a frequency of about 10-30 Hz, preferably of about 15 Hz.

Optionally, the raw materials used in the method of the invention may be pre-mixed without grinding to homogenize the powders mixture.

Disclosed herein is a core-shell catalyst system obtained/obtainable from the method as described above.

Via the method of the invention a new catalyst is formed, with unique features and a higher catalytic activity compared to traditional Pd-ceria catalysts prepared by conventional wet methods.

The core-shell catalyst system of the invention is obtained/obtainable by a fast, low energy milling method without the need of solvents or any thermal treatment. The core-shell catalytic system of the invention has proven to be highly active in catalytic abatement of noxious compounds.

Accordingly, in a further aspect the present invention refers to the use of the core-shell catalyst system as described above for the catalytic abatement of at least one compound selected among a gaseous hydrocarbon, preferably methane, a VOC, NOx, soot and mixtures thereof. In one embodiment, the use of the core-shell catalyst of the invention may be for the catalytic abatement of exhaust gas of a natural gas fueled engine.

The following examples are given in order to better illustrate the invention and are not intended to limit it in any way.

### EXAMPLES

HRTEM: high resolution transmission electron microscopy was carried out with a JEOL 2010F electron microscope equipped with a field emission source at an accelerating voltage of 200 kV. The point-to-point resolution achieved was 0.19 nm and the resolution between lines was 0.14 nm.

Particle size: The size of the particles (oxide) comprised in the core was obtained from HRTEM images by averaging the dimensions (diameter) several hundred particles for each sample.

Shell thickness: the dimensions of the layer were directly measured over HRTEM images.

EDX analysis: EDX spectra were obtained over selected areas of the HRTEM images by using an electron beam at the nanoscale.

Surface area: the surface area were measured via Brunauer-Emmett-Teller (BET) method in a Micromeritics Tristar 2000 after sample evacuation at 423 K for 1,5 hours using N₂ as adsorptive at 77 K.

Amorphous phase of the shell: the amorphous nature of the shell was determined by the absence of lattice fringes in the HRTEM images.

Dry grinding conditions: the dry grinding was carried out in a Pulverisette 23 Mini-Mill by grinding together dry powders of the components for a time comprised between 5 and 15 min at a frequency of 15 Hz. The grinding was carried out in a 15 ml zirconia bowl using 1 zirconia grinding ball (15 mm diameter, ρ = 5,9 g cm⁻³).

Catalytic test: Catalytic tests were carried out by placing 120mg of the catalyst system in a quartz micro-reactor on a quartz wool bed. The reactor was inserted in a tubular furnace to control the temperature and exposed to a mixture of 0.5 vol.% CH₄, 2 vol.% O₂ in He (dry atmosphere). Two heating/cooling ramps were performed up to 900°C (10°C/min) and the conversion of methane was monitored with an on-line ABB Uras 14 IR gas analyzer.

Stability test: the stability of the samples was assessed during 24 h time-on-stream tests carried out at 450°C in dry (see above) or wet atmosphere. In the latter case, 10 vol.% of water vapor was added to the dry feed. Prior to each stability test, a methane oxidation cycle (up to 900°C and back to room temperature) in dry atmosphere was carried out on 120 mg of sample as described above. After this cycle, the temperature was raised up to 450°C at 10°C/min for the stability test.

### Example 1

The sample (PdCe DS) was prepared using the Fritsch Pulverizette 23 Mini-mill. Cerium oxide was obtained by calcinating commercial Ceroxid (Treibacher) at 900°C for 3 hours in air. 990 mg of cerium oxide powder was weighted and briefly mixed in a sample holder with 10 mg of palladium black powder (Aldrich), until a homogeneous mix was formed. The powder was then put into the zirconia bowl, together with the grinding ball. The mini-mill was set to oscillate at 15 Hz for 10 minutes; afterwards, the obtained catalyst system was removed from the bowl by using a soft brush. The Pd nominal loading was 1 wt.%

### Example 2

For the preparation of the sample (PdAcCe DS 10) the procedure follows the same steps as Example 1, differing only for the Pd precursor used. To have a final loading of 1wt.% of Pd, 21,1 mg of Pd(CH₃COO)₂ (Aldrich) were mixed with 990 mg of cerium oxide (previously calcined as in Example 1) and milled 10 minutes at 15 Hz in the Pulverizette 23 Mini-mill.

### Example 3

The sample (PdAcCe DS 15) was made by initially following the procedure of Example 2. The powders were milled for 10 minutes in the Pulverisette, removed and put in the grinding bowl again and milled for additional 5 minutes at 15 Hz. The two-step preparation helps avoiding cluttering of ceria particles and to improve Pd distribution on ceria surface.

### Example 4

To prepare the sample (PdCZ75 DS), a procedure similar to Example 1 was used. Ce_{0.75}Zr_{0.25}O₂ (CZ75) support was obtained by co-precipitation, dried at 120°C for 16 hours and calcined at 900°C in air for 3 hours. 990 mg of CZ75 powders are measured and mixed with 10 mg of Pd black, then the same steps as Example 1 were followed.

### Example 5

A bimetallic PtPdCe DS catalyst system was prepared with a weight ratio of Pt:Pd equal to 1. The total metal loading (Pd+Pt)/wt_{cat} was 1 wt.%. At first, 990 mg of ceria (previously calcined as in Example 1) were mixed with 5 mg of Pd black and milled for 10 minutes at 15 Hz. The powders were taken out of the bowl with a brush and mixed to 5 mg of metallic Pt (Aldrich). Then they are re-loaded into the zirconia bowl and milled for 10 minutes.

### Example 6

A bimetallic catalyst system containing Pd and Cu was prepared following the same route as Example 5. The total metal loading (Pd+Cu)/wt_{cat} was 1 wt.%. Copper was added to the previously milled catalyst system in its metallic form (Aldrich).

### Comparative examples 7-8

Catalysts were also prepared by conventional incipient wetness impregnation (IWI) technique on the same ceria support used in Example 1 (PdCe IW) and Example 4 (PdCZ75 IW). For the impregnation, an aqueous solution of Pd(NO₃)₂ (Aldrich, 99,99%) was used in appropriate amount to reach a nominal Pd loading of 1 wt%. The catalysts were then dried at 120°C overnight and calcined at 900°C for 3 hours in static air.

### Comparative examples 9-10

Bimetallic catalysts were prepared by conventional IWI technique on the same ceria support as Example 5 (PtPdCe IW) and Example 6 (CuPtCe IW). For the impregnation, an aqueous solution of Pd(NO₃)₂ (Aldrich, 99,99%) and Pt(NH₃)₄(NO₃)₂ (Strem, 99%) or Cu(NO₃)₂•2.5H₂O (Aldrich, 98%) was used in order to have a final metal loading of 0,5 wt% Pd and 0,5 wt% Pt (or 0,5 wt% Cu). The catalysts were then dried at 120°C overnight and calcined at 900°C for 3 hours in static air.

### Comparative example 11

The catalyst sample PdOCe DS was prepared following the procedure of Example 1, using the same cerium oxide support and 11,6mg of palladium(II) oxide (Strem, 99,9%) to obtain a final metal loading of 1,0 wt.%Pd.

### Comparative example 12

The catalyst sample PdZr DS was prepared following the procedure of Example 1 and 4, using zirconium oxide as support. The zirconium oxide powder (ZrO₂) was obtained by precipitation, dried at 120°C for 16 hours and calcined at 900°C in air for 3 hours.

### Catalytic tests

The catalyst systems of Examples 1-6 and of Comparative examples 7-12 were subjected to the catalytic test. Table 1 summarizes the activation temperatures (T₁₀, i.e. temperature to achieve 10% methane conversion) and reaction rates (calculated at 270°C) for the different catalyst systems, together with their surface area and nominal palladium loading.

**Table 1 - Pd loading, surface areas, activation temperatures and reaction rates for Pd-based catalysts.**

| **Sample** | **Nominal Pd loading (wt%)** | **Surface area (m²/g)** | **T₁₀ [K]** | **Reaction rate (µmol/g_{Pd}*s)** |
|---|---|---|---|---|
| PdCe DS | 1 | 3.2 | 564 | 33.0 |
| PdAcCe DS 10 | 1 | 2.9 | 565 | 36.3 |
| PdAcCe DS 15 | 1 | 3.1 | 578 | 20.6 |
| PdCe IW | 1 | 2.3 | 583 | 11.5 |
| PdCZ75 DS | 1 | 20.0 | 585 | 20.7 |
| PdCZ75 IW | 1 | 13.8 | 614 | 5.9 |
| PtPdCe DS | 0.5 (0.5 Pt) | 4.9 | 608 | 35.3 ^{[a,b]} |
| PtPdCe IW | 0.5 (0.5 Pt) | 3.8 | 689 | 5.7 ^{[a,b]} |
| CuPdCe DS | 0.5 (0.5 Cu) | 5.3 | 697 | 7.3 ^{[a,b]} |
| CuPdCe IW | 0.5 (0.5 Cu) | 1.9 | 863 | 0 ^{[a,b]} |
| PdOCe DS | 1 | 4.1 | 726 | 0 ^{[b]} |
| PdZr DS | 1 | 5.2 | 613 | 8.4 |
| PdZr IW | 1 | 4.6 | 603 | 10.7 |

| | | | | |
|---|---|---|---|---|
| ^{[a]} Reaction rate is calculated per gram of metal, Pd+Pt or Pd+Cu; ^{[b]} Reaction rate is calculated at T = 310°C. | | | | |

The core-shell catalyst systems of Examples 1-6 made according to the method of the invention showed very good catalytic activity for methane oxidation.

The light-off curves of methane combustion for the Examples 1-6 and for Comparative examples 7-10 are shown in Figures 1-5.

The light-off curves present the shape typical of Pd-based catalyst systems in which a loss in methane conversion during cooling is observed due to the decomposition of PdO (which is formed during heating in excess oxygen). Remarkably, this feature is almost disappeared on catalysts systems PdAcCe DS10 and PdAcCe DS15 prepared using Pd acetate as metal precursor (Figure 2). All the samples prepared by the dry grinding method according to the invention show a much higher catalytic activity for methane oxidation compared to their impregnated counterparts.

This is evidenced clearly when looking at the values of T₁₀ and reaction rates: the T₁₀ are much lower for DS catalysts and their reaction rates are significantly higher than those of the corresponding IW samples.

### Stability tests

The samples of Example 1 and 2 and of Comparative Example 7 were tested also for stability during time-on-stream operation in dry and wet atmosphere, and the results are shown in Figure 6 and 7, respectively.

It can be observed that in dry atmosphere both PdCe DS and PdAcCe DS retain almost completely their initial activity (decrease in methane conversion of about 3%), while the IW sample loses around 9% of methane conversion, starting from a much lower value. In presence of water vapor (Figure 7) the catalysts suffer from higher deactivation. The PdCe DS sample is the more resistant to water poisoning in these conditions, losing only 13% of its initial activity, while PdCe IW decreases by 25% starting from around the same conversion value. PdAcCe DS 10 shows a peculiar behavior: it starts from a much higher conversion value (around 80%), which rapidly falls to 50% in the first 6 hours; after that, the loss in activity is slower and it reaches 40% of its initial value by the end of the 24-hour isothermal period.

### Characterization

Figures 8a and 8b show significant HRTEM images of PdCe DS. As it can be observed, most of the ceria crystallites are covered by an amorphous layer measuring between 2 and 5 nm in thickness. This amorphous shell is compact and perfectly defined following the perimeter of the ceria particles. Interestingly, the ceria crystallites covered by this layer do not exhibit sharp edges; in most cases, they present a rounded morphology, which suggests that the dry grinding of Pd by mechanical mixing certainly affects the surface of the ceria crystallites.

EDX analysis (Figure 9) shows the common occurrence of cerium and palladium, being the signal of Ce much more intense than that of Pd and indicating that the shell is comprised of a mixed Pd-Ce phase.

A thinner and less uniform shell appears when using Pd acetate instead of Pd black as metal precursor (Figure 10).

Figures 11 and 12 refers to catalyst systems prepared by dry grinding palladium oxide and ceria (PdOCe DS) or metallic palladium and zirconia (PdZr DS). These samples do not exhibit the core-shell structure characterizing the catalyst system of the invention.

## Claims

1. A core-shell catalyst system, **characterized in that**
- the core comprises at least one oxide selected among ceria, a ceria-based mixed oxide and mixtures thereof, preferably ceria, said core comprising at least one particle having size of 2-100 nm, preferably of 5-100 nm, more preferably of 20-80 nm; and
- the shell comprises an amorphous phase comprising Pd and an oxide selected among ceria, a ceria-based mixed oxide and mixtures thereof, the shell having thickness of ≤ 5 nm, preferably of 0.5 - 5 nm.

2. The core-shell catalyst system according to claim 1, wherein the ceria-based mixed oxide comprises ≤ 40 mol.%, preferably 1-40 mol.%, more preferably 10-30 mol.%, of at least one element selected among Zr, In, Sn, La, Pr, Nd, Pm, Sm, Eu, Gd, Tb, Dy, Ho, Er, Tm, Yb, Lu, Sc, Y and mixtures thereof, preferably Zr.

3. The core-shell catalyst system according to any one of claim 1 or 2, wherein the oxide comprised in the core has surface area measured by BET method comprised in the range ≤ 50 m²/g, preferably 0.5-50 m²/g, more preferably 2.0-30.0 m²/g.

4. The core-shell catalyst system according to any one of claims 1-3, wherein the shell comprises ≤ 5.0 wt.% of Pd, preferably ≤ 2.0 wt.%, more preferably ≤ 1.5 wt.%, still more preferably 0.1 - 1.0 wt.%.

5. The core-shell catalyst system according to any one of claims 1-4, wherein the shell comprises at least one further metal M selected among Cu, Ru, Rh, Ag, Os, Ir, Pt, Au and mixture thereof, preferably among Cu, Pt and mixtures thereof, more preferably Pt, wherein preferably the total metal loading of the shell is ≤ 5.0 wt.%, preferably ≤ 2.0 wt.%, more preferably ≤ 1.5 wt.%, still more preferably 0.1 - 1.0 wt.%, wherein preferably the weight ratio Pd:M ranges from 90:10 to 10:90, preferably from 70:30 to 30:70, more preferably is 50:50.

6. The core-shell catalyst system according to claim 5, wherein the further metal M comprised in the shell is selected among metallic M, a solid compound of metal M and mixtures thereof, preferably metallic M.

7. The core-shell catalyst system according to any one of claims 1-6, wherein the Pd comprised in the shell is selected among metallic Pd, an organic salt of Pd, and mixtures thereof, more preferably among metallic Pd, Pd(CH₃COO)₂ and mixtures thereof, still more preferably is metallic Pd.

8. A method for preparing of the core-shell catalyst system as defined in claim 1, comprising a step (i) of dry grinding a mixture comprising at least one selected among metallic Pd, a solid organic salt of palladium and mixtures thereof and at least one oxide selected among ceria, a ceria-based mixed oxide and mixtures thereof, wherein preferably the Pd in the mixture of the dry grinding step (i) is ≤ 5.0 wt.%, preferably ≤ 2.0 wt.%, more preferably ≤ 1.5 wt.%, still more preferably 0.1 - 1.0 wt.%.

9. The method according to claim 8 for the preparation of the core-shell catalyst system as defined in claim 5 or 6, comprising a further step (ii) of dry grinding the core-shell catalyst system obtained from step (i) with at least one selected among metallic M, a solid compound of metal M and mixtures thereof, preferably metallic M.

10. The method according to claim 8 or 9 for the preparation of the core-shell catalyst system as defined in claim 5 or 6, wherein the mixture of step (i) comprises at least one selected among metallic M, a solid compound of metal M and mixtures thereof, preferably metallic M.

11. The method according to claim 9 or 10, wherein the total metal loading of the shell is ≤ 5.0 wt.%, preferably ≤ 2.0 wt.%, more preferably ≤ 1,5 wt.%, still more preferably 0.1 - 1.0 wt.%, wherein preferably the weight ratio Pd:M in the shell ranges from 90:10 to 10:90, preferably from 70:30 to 30:70, more preferably is 50:50.

12. The method according to any one of claim 8 or 9, wherein the dry grinding step (i) and the dry grinding step (ii), if present, is carried out by ball-milling, preferably with a weight ratio of grinding media to powders of 5-20, preferably for a time comprised between 5 and 20 minutes.

13. The method according to any one of claims 8-12, comprising a step (a) of calcining at least one oxide selected among ceria, a ceria-based mixed oxide and mixtures thereof, wherein step (a) is carried out before the dry grinding step (i), wherein preferably step (a) is carried out in presence of oxygen, more preferably of air, wherein preferably step (a) is carried out at temperature ≥ 850°C, preferably of 850°-1200°C, more preferably of 850°C-1000°C, still more preferably of 900°C, for a time ≥ 2 hours, preferably of 2 - 4 hours, more preferably of 3 hours.

14. The method according to any one of claims 8-13, wherein the at least one ceria-based mixed oxide of the dry grinding step (i) comprises ≤ 40 mol.%, preferably 1-40 mol.%, more preferably 10 - 30 mol.%, of an element selected among Zr, In, Sn, La, Pr, Nd, Pm, Sm, Eu, Gd, Tb, Dy, Ho, Er, Tm, Yb, Lu, Sc, Y and mixtures thereof, preferably Zr.

15. Use of the core-shell catalyst system as described in any one of claims 1-7 for the catalytic abatement of at least one selected among a gaseous hydrocarbon, preferably methane, a VOC, NOx, soot and mixtures thereof, preferably for the catalytic abatement of exhaust gas of a natural gas fueled engine.

## Patentansprüche

1. Kern-Schale-Katalysatorsystem, **dadurch gekennzeichnet, dass**
- der Kern mindestens ein Oxid umfasst, das aus Ceroxid, einem auf Ceroxid basierenden Mischoxid und Mischungen davon, vorzugsweise Ceroxid, ausgewählt ist, wobei der Kern mindestens ein Teilchen mit einer Größe von 2-100 nm, vorzugsweise von 5-100 nm, bevorzugter von 20-80 nm umfasst; und
- die Schale eine amorphe Phase umfasst, die Pd und ein Oxid umfasst, das aus Ceroxid, einem auf Ceroxid basierenden Mischoxid und Mischungen davon ausgewählt ist, wobei die Schale eine Dicke von ≤ 5 nm, vorzugsweise von 0,5 - 5 nm aufweist.

2. Kern-Schale-Katalysatorsystem nach Anspruch 1, wobei das auf Ceroxid basierende Mischoxid ≤ 40 Mol- %, vorzugsweise 1-40 Mol- %, bevorzugter 10-30 Mol- %, mindestens eines Elements, ausgewählt aus Zr, In, Sn, La, Pr, Nd, Pm, Sm, Eu, Gd, Tb, Dy, Ho, Er, Tm, Yb, Lu, Sc, Y und Mischungen davon, vorzugsweise Zr, umfasst.

3. Kern-Schale-Katalysatorsystem nach einem der Ansprüche 1 oder 2, wobei das Oxid, das im Kern enthalten ist, eine Oberfläche aufweist, die durch die BET-Methode gemessen wird und im Bereich ≤ 50 m²/g, vorzugsweise 0,5-50 m²/g, bevorzugter 2,0-30,0 m²/g, enthalten ist.

4. Kern-Schale-Katalysatorsystem nach einem der Ansprüche 1-3, wobei die Schale ≤ 5,0 Gew.- % Pd, vorzugsweise ≤ 2,0 Gew.- %, bevorzugter ≤ 1,5 Gew.- %, noch bevorzugter 0,1 bis 1,0 Gew.- % umfasst.

5. Kern-Schale-Katalysatorsystem nach einem der Ansprüche 1-4, wobei die Schale mindestens ein weiteres Metall M umfasst, ausgewählt aus Cu, Ru, Rh, Ag, Os, Ir, Pt, Au und Mischungen davon, vorzugsweise aus Cu, Pt und Mischungen davon, bevorzugter Pt, wobei vorzugsweise die Gesamtmetallbeladung der Schale ≤ 5,0 Gew.- %, vorzugsweise ≤ 2,0 Gew.- %, bevorzugter ≤ 1,5 Gew.- %, noch bevorzugter 0,1 bis 1,0 Gew.- % ist, wobei vorzugsweise das Gewichtsverhältnis Pd:M im Bereich von 90:10 bis 10:90, vorzugsweise von 70:30 bis 30:70, bevorzugter 50:50 liegt.

6. Kern-Schale-Katalysatorsystem nach Anspruch 5, wobei das weitere Metall M, das in der Schale enthalten ist, aus metallischem M, einer festen Verbindung von Metall M und Mischungen davon, vorzugsweise metallischem M ausgewählt ist.

7. Kern-Schale-Katalysatorsystem nach einem der Ansprüche 1-6, wobei das in der Schale enthaltene Pd aus metallischem Pd, einem organischen Salz von Pd und Mischungen davon, bevorzugter aus metallischem Pd, Pd(CH3C00)₂ und Mischungen davon ausgewählt ist, noch bevorzugt ist metallisches Pd.

8. Verfahren zur Herstellung des Kern-Schale-Katalysatorsystems wie definiert in Anspruch 1, umfassend einen Schritt (i) zum Trockenmahlen einer Mischung, umfassend mindestens eines, ausgewählt aus metallischem Pd, einem festen organischen Salz von Palladium und Mischungen davon, und mindestens ein Oxid, ausgewählt aus Ceroxid, einem auf Ceroxid basierenden Mischoxid und Mischungen davon, wobei vorzugsweise das Pd in der Mischung des Trockenmahlschrittes (i) ≤ 5,0 Gew.- %, vorzugsweise ≤ 2,0 Gew.- %, bevorzugter ≤ 1,5 Gew.- %, noch bevorzugter 0,1 - 1,0 Gew.- % ist.

9. Verfahren nach Anspruch 8 zur Herstellung des Kern-Schale-Katalysatorsystems wie definiert in Anspruch 5 oder 6, umfassend einen weiteren Schritt (ii) zum Trockenmahlen des aus Schritt (i) erhaltenen Kern-Schale-Katalysatorsystems mit mindestens einem, ausgewählt aus metallischem M, einer festen Verbindung von Metall M und Mischungen davon, vorzugsweise metallischem M.

10. Verfahren nach Anspruch 8 oder 9 zur Herstellung des Kern-Schale-Katalysatorsystems wie definiert in Anspruch 5 oder 6, wobei die Mischung von Schritt (i) mindestens eines umfasst, das aus metallischem M, einer festen Verbindung von Metall M und Mischungen davon, vorzugsweise metallischem M, ausgewählt ist.

11. Verfahren nach Anspruch 9 oder 10, wobei die Gesamtmetallbeladung der Schale ≤ 5,0 Gew.- %, vorzugsweise ≤ 2,0 Gew.- %, bevorzugter ≤ 1,5 Gew.- %, noch bevorzugter 0,1 - 1,0 Gew.- % ist, wobei vorzugsweise das Gewichtsverhältnis Pd:M in der Schale im Bereich von 90:10 bis 10:90, vorzugsweise von 70:30 bis 30:70, bevorzugter 50:50 ist.

12. Verfahren nach einem der Ansprüche 8 oder 9, wobei der Trockenmahlschritt (i) und der Trockenmahlschritt (ii), falls vorhanden, durch Kugelmahlen durchgeführt werden, vorzugsweise mit einem Gewichtsverhältnis von Mahlmedien zu Pulvern von 5-20, vorzugsweise für eine Zeitdauer zwischen 5 und 20 Minuten.

13. Verfahren nach einem der Ansprüche 8-12, umfassend einen Schritt (a) zum Kalzinieren mindestens eines Oxids, ausgewählt aus Ceroxid, einem auf Ceroxid basierenden Mischoxid und Mischungen davon, wobei Schritt (a) vor dem Trockenmahlschritt (i) durchgeführt wird, wobei vorzugsweise Schritt (a) in Gegenwart von Sauerstoff, bevorzugter von Luft, durchgeführt wird, wobei vorzugsweise Schritt (a) bei einer Temperatur ≥ 850 °C, vorzugsweise von 850 °C bis 1200 °C, bevorzugter von 850 °C bis 1000 °C, noch bevorzugter von 900 °C, für eine Zeit ≥ 2 Stunden, vorzugsweise von 2 bis 4 Stunden, bevorzugter von 3 Stunden durchgeführt wird.

14. Verfahren nach einem der Ansprüche 8-13, wobei das mindestens eine auf Ceroxid basierende Mischoxid des Trockenmahlschrittes (i) ≤ 40 Mol- %, vorzugsweise 1-40 Mol- %, bevorzugter 10-30 Mol- %, eines Elements, ausgewählt aus Zr, In, Sn, La, Pr, Nd, Pm, Sm, Eu, Gd, Tb, Dy, Ho, Er, Tm, Yb, Lu, Sc, Y und Mischungen davon, vorzugsweise Zr, umfasst.

15. Verwendung des Kern-Schale-Katalysatorsystems wie beschrieben in einem der Ansprüche 1-7 zur katalytischen Verminderung von mindestens einem ausgewählt aus einem gasförmigen Kohlenwasserstoff, vorzugsweise Methan, einem VOC, NOx, Ruß und Mischungen davon, vorzugsweise zur katalytischen Verminderung von Abgas eines mit Erdgas betriebenen Motors.

## Revendications

1. Système catalytique à noyau-coque, **caractérisé en ce que**
- le noyau comprend au moins un oxyde choisi parmi l'oxyde de cérium, un oxyde mixte à base d'oxyde de cérium et des mélanges de ceux-ci, de préférence l'oxyde de cérium, ledit noyau comprenant au moins une particule ayant une dimension de 2-100 nm, de préférence de 5-100 nm, plus préférablement de 20-80 nm ; et
- la coque comprend une phase amorphe comprenant du Pd et un oxyde choisi parmi l'oxyde de cérium, un oxyde mixte à base d'oxyde de cérium et des mélanges de ceux-ci, la coque ayant une épaisseur ≤ à 5 nm, de préférence de 0,5 à 5 nm.

2. Système catalytique à noyau-coque selon la revendication 1, dans lequel l'oxyde mixte à base d'oxyde de cérium comprend une quantité ≤ à 40 % en moles, de préférence de 1-40 % en moles, plus préférablement 10-30 % en moles, d'au moins un élément choisi parmi Zr, In, Sn, La, Pr, Nd, Pm, Sm, Eu, Gd, Tb, Dy, Ho, Er, Tm, Yb, Lu, Sc, Y et leurs mélanges, de préférence Zr.

3. Système catalytique à noyau-coque selon l'une quelconque des revendications 1 ou 2, dans lequel l'oxyde compris dans le noyau présente une surface spécifique mesurée par la méthode BET comprise dans l'intervalle ≤ 50 m²/g, de préférence entre 0,5-50 m²/g, plus préférablement entre 2,0-30,0 m²/g.

4. Système catalytique à noyau-coque selon l'une quelconque des revendications 1-3, dans lequel la coque comprend une quantité ≤ à 5,0 % en poids de Pd, de préférence ≤ à 2,0 % en poids, plus préférablement ≤ à 1,5 % en poids, encore plus préférablement entre 0,1 - 1,0 % en poids.

5. Système catalytique à noyau-coque selon l'une quelconque des revendications 1-4, dans lequel la coque comprend au moins un métal M supplémentaire choisi parmi Cu, Ru, Rh, Ag, Os, Ir, Pt, Au et leurs mélanges, de préférence parmi Cu, Pt et leurs mélanges, plus préférablement Pt, dans lequel de préférence la charge métallique totale de la coque est ≤ à 5,0 % en poids, de préférence ≤ à 2,0 % en poids, plus préférablement ≤ à 1,5 % en poids, encore plus préférablement entre 0,1 - 1,0 % en poids, dans lequel de préférence le rapport pondéral Pd:M est compris entre 90:10 et 10:90, de préférence entre 70:30 et 30:70, plus préférablement est de 50:50.

6. Système catalytique à noyau-coque selon la revendication 5, dans lequel le métal M supplémentaire compris dans la coque est choisi parmi le M métallique, un composé solide du métal M et leurs mélanges, de préférence le M métallique.

7. Système catalytique à noyau-coque selon l'une quelconque des revendications 1-6, dans lequel le Pd compris dans la coque est choisi parmi le Pd métallique, un sel organique de Pd, et leurs mélanges, plus préférablement parmi le Pd métallique, le Pd(CH3C00)₂ et leurs mélanges, encore plus préférablement le Pd métallique.

8. Procédé de préparation du système catalytique à noyau-coque tel que défini dans la revendication 1, comprenant une étape (i) de broyage à sec d'un mélange comprenant au moins un élément choisi parmi le Pd métallique, un sel organique solide de palladium et leurs mélanges et au moins un oxyde choisi parmi l'oxyde de cérium, un oxyde mixte à base d'oxyde de cérium et leurs mélanges, dans lequel de préférence le Pd dans le mélange de l'étape de broyage à sec (i) est ≤ à 5,0 % en poids, de préférence ≤ à 2,0 % en poids, plus préférablement ≤ à 1,5 % en poids, encore plus préférablement entre 0,1 - 1,0 % en poids.

9. Procédé selon la revendication 8 pour la préparation du système catalytique à noyau-coque tel que défini dans la revendication 5 ou 6, comprenant une étape supplémentaire (ii) de broyage à sec du système catalytique noyau-coque obtenu à l'étape (i) avec au moins un élément choisi parmi le M métallique, un composé solide du métal M et leurs mélanges, de préférence le M métallique.

10. Procédé selon la revendication 8 ou 9 pour la préparation du système catalytique à noyau-coque tel que défini dans la revendication 5 ou 6, dans lequel le mélange de l'étape (i) comprend au moins un élément choisi parmi le M métallique, un composé solide du métal M et leurs mélanges, de préférence le M métallique.

11. Procédé selon la revendication 9 ou 10, dans lequel la charge de métal totale de la coque est ≤ à 5,0 % en poids, de préférence ≤ à 2,0 % en poids, plus préférablement ≤ à 1,5 % en poids, encore plus préférablement entre 0,1 - 1,0 % en poids, dans lequel de préférence le rapport pondéral Pd:M dans la coque est compris entre 90:10 et 10:90, de préférence entre 70:30 et 30:70, plus préférablement est de 50:50.

12. Procédé selon l'une quelconque des revendications 8 ou 9, dans lequel l'étape de broyage à sec (i) et l'étape de broyage à sec (ii), si elle est présente, est réalisée par broyage à boulets, de préférence avec un rapport pondéral entre les moyens de broyage et les poudres de 5-20, de préférence pendant une durée comprise entre 5 et 20 minutes.

13. Procédé selon l'une quelconque des revendications 8-12, comprenant une étape (a) de calcination d'au moins un oxyde choisi parmi l'oxyde de cérium, un oxyde mixte à base d'oxyde de cérium et leurs mélanges, dans lequel l'étape (a) est réalisée avant l'étape de broyage à sec (i), dans lequel de préférence l'étape (a) est réalisée en présence d'oxygène, plus préférablement d'air, dans lequel, de préférence, l'étape (a) est réalisée à une température ≥ à 850 °C, de préférence entre 850 °-1200 °C, plus préférablement entre 850 °C-1000 °C, encore plus préférablement de 900 °C, pendant une durée ≥ à 2 heures, de préférence entre 2 et 4 heures, plus préférablement de 3 heures.

14. Procédé selon l'une quelconque des revendications 8-13, dans lequel l'au moins un oxyde mixte à base d'oxyde de cérium de l'étape (i) de broyage à sec comprend une quantité ≤ à 40 % en moles, de préférence de 1-40 % en moles, plus préférablement de 10-30 % en moles, d'un élément choisi parmi Zr, In, Sn, La, Pr, Nd, Pm, Sm, Eu, Gd, Tb, Dy, Ho, Er, Tm, Yb, Lu, Sc, Y et leurs mélanges, de préférence Zr.

15. Utilisation du système catalytique à noyau-coque tel que décrit dans l'une quelconque des revendications 1-7 pour la réduction catalytique d'au moins un élément choisi parmi un hydrocarbure gazeux, de préférence le méthane, un COV, les NOx, la suie et leurs mélanges, de préférence pour la réduction catalytique des gaz d'échappement d'un moteur alimenté au gaz naturel.
